# EUROPÄISCHE PATENTSCHRIFT

(11) **EP 4 255 764 B1**
(45) Veröffentlichungstag und Bekanntmachung des Hinweises auf die Patenterteilung: **22.01.2025**
(21) Anmeldenummer: 21819033.8
(22) Anmeldetag: 17.11.2021
(51) Int. Cl.: B60L 7/26, B60T 8/175

(54) **BREMSMOMENT-REGELVORRICHTUNG, BREMSSYSTEM UND VERFAHREN ZUM REGELN EINES BREMSMOMENTS**
BRAKE MOMENT CONTROL SYSTEM, BRAKE SYSTEM AND METHOD FOR CONTROLLING A BRAKE MOMENT
SYSTÈME CONTRÔLE D'UN SYSTÈME DE FREINAGE, SYSTÈME DE FREINAGE ET PROCÉDÉ DE CONTRÔL D'UNE COUPLE DE FREINAGE

(30) Priorität: 07.12.2020 DE 102020215398
(43) Veröffentlichungstag der Anmeldung: 11.10.2023
(73) Patentinhaber: Robert Bosch GmbH, 70442 Stuttgart (DE)
(72) Erfinder: STEINMANN, Jochen, 74245 Loewenstein (DE); STAACK, Jochen, 71364 Winnenden (DE); JUERGENS, Jonathan, 70176 Stuttgart (DE); ZOEBELE, Andreas, 71706 Markgroeningen (DE); KRAHL, Hans Christian, 74363 Gueglingen (DE)
(86) Internationale Anmeldenummer: PCT/EP2021/081938
(87) Internationale Veröffentlichungsnummer: WO 2022/122323

(56) Entgegenhaltungen:
- US-A1- 2010 312 447
- US-A1- 2014 257 664
- US-A1- 2016 368 384
- US-A1- 2018 257 656

## Beschreibung

Die vorliegende Erfindung betrifft eine Bremsmoment-Regelvorrichtung, ein Bremssystem und ein Verfahren zum Regeln eines Bremsmoments für ein Kraftfahrzeug.

### Stand der Technik

Kooperative Bremssysteme umfassen klassische hydraulische Reibbremsen, welche ein Rad des Fahrzeugs mit einem Reibbremsmoment beaufschlagen, sowie eine weitere Bremsvorrichtung, welche ein Rad des Kraftfahrzeugs mit einem regenerativen Bremsmoment beaufschlagt. Zur Erzeugung des regenerativen Bremsmoments wird die elektrische Maschine des Kraftfahrzeugs als Generator betrieben. Vorteilhafterweise wird dabei die Bewegungsenergie während des Bremsvorgangs in speicherbare elektrische Energie umgewandelt. Das beim Bremsen auf die Räder des Kraftfahrzeugs beaufschlagte generatorische bzw. regenerative Bremsmoment muss geeignet vorgegeben werden.

Zur Reduzierung des Bremswegs bei einer Gefahrenbremsung kann die elektrische Maschine bei entsprechender Ansteuerung ein generatorisches Moment stellen, das die klassische hydraulische Reibbremse in Bezug auf die maximale Verzögerung des Fahrzeugs unterstützt. Die Summe der von beiden Stellern aufgebrachten Bremsdrehmomente liefert das gesamte wirkende Bremsdrehmoment des Kraftfahrzeugs. Bei mehrachsigen Fahrzeugen kann dies durch die gezielte Aufteilung des angeforderten generatorischen Bremsdrehmoments auf die jeweiligen elektrischen Maschinen erfolgen.

Hierbei können festgelegte generatorische Bremsdrehmomente, welche beispielsweise einer 0,3g-Verzögerung oder einer Nullmoment-Anforderung entsprechen, von der Bremssteuereinheit angefordert werden. Das dynamische Verhalten der elektrischen Maschinen oder das Nicken des Fahrzeugs werden hierzu nicht berücksichtigt.

Bei zu hohen angeforderten generatorischen Bremsdrehmomenten kann es zur Blockierung der Räder kommen, die über einen Schlupfregler erkannt werden und zu einer Reduzierung des generatorischen Bremsdrehmoments führen.

Ein kooperatives Bremssystem, wobei ein Schlupf der Räder vermieden werden soll, ist aus der US 6 231 134 B1 bekannt. Die DE 142 276 A1 betrifft ein Verfahren zur Verbesserung des Bremsverhaltens für ein Kraftfahrzeug mit einer verschleißfreien Bremse. Aus der CN 109878480 A ist ein Verfahren zur Vorhersage eines Reibungskoeffizienten bekannt. Die US 2016/0368384 A betrifft ein Verfahren zum Steuern von regenerativen Bremsmomenten.

Es kann versucht werden, das Blockieren der Räder durch einen Schlupfbeobachter zu vermeiden, indem beim Überschreiten kritischer Schlupfwerte eine Reaktion ausgelöst wird. Diese kann beispielsweise eine Reduzierung des angeforderten generatorischen Bremsmoments beinhalten.

Da elektrische Maschinen durch entsprechend schnelle Ansteuerung von einem Inverter hochdynamisch Drehmomente in wenigen Millisekunden stellen können, kann es infolge der federnden und dämpfenden Eigenschaften des mechanischen Antriebsstrangs zu einer Drehmomentüberhöhung über die Sollwerte hinaus kommen, die auf die Räder wirken und diese zum Blockieren bringen können. Dieses Verhalten hängt auch von den Massenträgheiten der vorhandenen E-Maschinen und der Anzahl der angetriebenen Achsen ab. Ohne die Berücksichtigung dieser Sprungantwort infolge eines Drehmomentlastwechsels kann erst im darauffolgenden Kommunikationszyklus zwischen Brems- und Inverter-Steuereinheit oder Fahrzeugsteuereinheit (englisch: vehicle control unit) eine Korrektur des angeforderten Solldrehmoments erfolgen. Eine Blockierung der Räder kann damit zwar korrigiert aber nicht von vornerein verhindert werden.

Aus der US 2010/0312447 A1 ist ein regenerative Bremsenkontrollsystem sowie ein entsprechendes Verfahren bekannt.

### Offenbarung der Erfindung

Die Erfindung stellt eine Bremsmoment-Regelvorrichtung, ein Bremssystem und ein Verfahren zum Regeln eines Bremsmoments für ein Kraftfahrzeug mit den Merkmalen der unabhängigen Patentansprüche bereit.

Bevorzugte Ausführungsformen sind Gegenstand der jeweiligen Unteransprüche.

Gemäß einem ersten Aspekt betrifft die Erfindung demnach eine Bremsmoment-Regelvorrichtung für ein Kraftfahrzeug, wobei das Kraftfahrzeug eine erste Bremsvorrichtung und eine zweite Bremsvorrichtung umfasst. Die erste Bremsvorrichtung ist dazu ausgebildet, mindestens ein Rad des Kraftfahrzeugs mit einem Reibbremsmoment zu beaufschlagen. Die zweite Bremsvorrichtung ist dazu ausgebildet, mindestens ein Rad des Kraftfahrzeugs mit einem regenerativen Bremsmoment zu beaufschlagen. Die Bremsmoment-Regelvorrichtung umfasst eine Schnittstelle und eine Recheneinrichtung. Die Schnittstelle empfängt Informationen über einen Fahrzustand des Kraftfahrzeugs. Die Recheneinrichtung bestimmt einen Sollwert für das regenerative Bremsmoment, wobei sie die empfangenen Informationen über den Fahrzustand des Kraftfahrzeugs, ein maximal über die jeweiligen Antriebsachsen des Kraftfahrzeugs auf einen Untergrund übertragbares Achsbremsmoment unter Berücksichtigung einer aufgrund eines Nickverhaltens des Fahrzeugs an den Antriebsachsen jeweils wirkenden Normalkraft, sowie eine Dynamik eines Antriebsstrangs der jeweils angetriebenen Achsen des Kraftfahrzeugs berücksichtigt. Die Recheneinrichtung ist weiter dazu ausgebildet ist, über die Schnittstelle die zweite Bremsvorrichtung derart anzusteuern, dass das beaufschlagte regenerative Bremsmoment auf den von der Recheneinrichtung bestimmten Sollwert geregelt wird.

Gemäß einem zweiten Aspekt betrifft die Erfindung demnach ein Bremssystem für ein Kraftfahrzeug mit einer ersten Bremsvorrichtung, welche dazu ausgebildet ist, mindestens ein Rad des Kraftfahrzeugs mit einem Reibbremsmoment zu beaufschlagen. Weiter umfasst das Bremssystem eine zweite Bremsvorrichtung, welche dazu ausgebildet ist, mindestens ein Rad des Kraftfahrzeugs mit einem regenerativen Bremsmoment zu beaufschlagen. Schließlich umfasst das Bremssystem eine erfindungsgemäße Bremsmoment-Regelvorrichtung.

Gemäß einem dritten Aspekt betrifft die Erfindung demnach ein Verfahren zum Regeln eines Bremsmoments für ein Kraftfahrzeug, wobei das Kraftfahrzeug eine erste Bremsvorrichtung und eine zweite Bremsvorrichtung umfasst, wobei die erste Bremsvorrichtung dazu ausgebildet ist, mindestens ein Rad des Kraftfahrzeugs mit einem Reibbremsmoment zu beaufschlagen, und wobei die zweite Bremsvorrichtung dazu ausgebildet ist, mindestens ein Rad des Kraftfahrzeugs mit einem regenerativen Bremsmoment zu beaufschlagen. Informationen über einen Fahrzustand des Kraftfahrzeugs werden empfangen. Ein Sollwert für das regenerative Bremsmoment wird bestimmt, wobei die empfangenen Informationen über den Fahrzustand des Kraftfahrzeugs, ein maximal über die jeweiligen Antriebsachsen des Kraftfahrzeugs auf einen Untergrund übertragbares Achsbremsmoment unter Berücksichtigung einer aufgrund des Nickverhaltens des Fahrzeugs an den Antriebsachsen jeweils wirkenden Normalkraft, sowie eine Dynamik eines Antriebsstrangs der jeweils angetriebenen Achsen des Kraftfahrzeugs berücksichtigt werden. Die zweite Bremsvorrichtung wird derart angesteuert, dass das beaufschlagte regenerative Bremsmoment auf den von der Recheneinrichtung bestimmten Sollwert geregelt wird.

### Vorteile der Erfindung

Die Erfindung betrifft somit eine Bremsmoment-Regelvorrichtung mit einer ersten Bremsvorrichtung, welche als klassische Reibbremse fungiert, und einer zweiten Bremsvorrichtung, welche ein regeneratives Bremsmoment bereitstellt, welches durch eine oder mehrere elektrische Maschinen erzeugt werden kann.

Erfindungsgemäß wird der Sollwert manöverabhängig bestimmt, d. h. in Abhängigkeit von den Informationen über den Fahrzustand des Kraftfahrzeugs. Die Informationen bezüglich des "Fahrzustands" des Kraftfahrzeugs können insbesondere Informationen über eine Geschwindigkeit, eine Beschleunigung, einen Lenkwinkel oder Informationen bezüglich einer Streckenbeschaffenheit umfassen, insbesondere hinsichtlich einer Steigung oder Beschaffenheit des Untergrunds.

Die dynamische Achslastverlagerung kann zum Bestimmen des Sollwerts für das regenerative Bremsmoment berücksichtigt werden. Dabei wird über den Drallsatz und unter Verwendung der Feder- und Dämpfereigenschaften des Fahrwerks ein Nickverhalten des Kraftfahrzeugs um den Schwerpunkt herum ermittelt. Hierzu können etwa radindividuelle Eigenschaften bezüglich einer Stützfeder und eines Stoßdämpfersmit den entsprechenden Federkonstanten und Dämpfungskonstanten berücksichtigt werden.

Anhand einer Normalkraftabschätzung kann ein Blockierdruck berechnet werden, der nicht überschritten werden soll. Die Normalkraft bezeichnet hierbei eine Kraft auf die Räder, welche orthogonal zum Untergrund ist, also somit einer Aufstandskraft des jeweiligen Rades entspricht.

Schließlich wird die Dynamik des Antriebsstrangs des Kraftfahrzeugs berücksichtigt, d.h. das dynamische Verhalten im Antriebsstrang aufgrund der Feder- und Dämpfereigenschaften des Antriebsstrangs unter Berücksichtigung der wirkenden Massenträgheiten.

Ein Vorteil der Erfindung liegt in der Reduzierung des Bremswegs bei einer Gefahrenbremsung durch optimales Stellen des regenerativen Bremsdrehmoments bei gleichzeitig aktivem Bremsdruckaufbau der ersten Bremsvorrichtung. Dies kann durch eine prädiktive Bestimmung des manöverabhängigen Solldrehmoments der elektrischen Maschine während einer Gefahrenbremsung unter Nutzung der dynamischen Eigenschaften des Antriebstrangs erzielt werden.

Gemäß einer Ausführungsform der Bremsmoment-Regelvorrichtung umfasst das Bestimmen eines Sollwertes für das regenerative Bremsmoment ein Bestimmen eines zeitlichen Verlaufs des Sollwertes.

Gemäß einer Ausführungsform der Bremsmoment-Regelvorrichtung ist die Recheneinrichtung weiter dazu ausgebildet, den Sollwert für das regenerative Bremsmoment derart zu bestimmen, dass ein Blockieren der Räder des Kraftfahrzeugs während eines Bremsvorgangs vermieden wird.

Erfindungsgemäß ist die Recheneinrichtung weiter dazu ausgebildet, den Sollwert für das regenerative Bremsmoment derart zu bestimmen, dass ein regeneratives Bremsmoment an einer Vorderachse des Kraftfahrzeug und/oder eine Normalkraft an einer Hinterachse des Kraftfahrzeugs maximiert wird. Der Sollwert kann optimiert werden, sodass das regenerative Bremsmoment möglichst groß ist, ohne dass dies zu einer Blockierung der Räder führt. Der Sollwert für das regenerative Bremsmoment kann somit derart bestimmt werden, dass die dadurch erzeugte Überhöhung sich möglichst nah an der maximal übertragbaren Normalkraft in der jeweils gültigen Fahrsituation bewegt.

Gemäß einer Ausführungsform der Bremsmoment-Regelvorrichtung ist die Recheneinrichtung weiter dazu ausgebildet, zum Bestimmen des Sollwerts für das regenerative Bremsmoment eine Latenzzeit zwischen einem Zeitpunkt einer Solldrehmomentanforderung und einem Zeitpunkt des Beaufschlagens des mindestens einen Rades mit dem regenerativen Drehmoment zu berücksichtigen. Somit wird berücksichtigt, dass das regenerative Bremsmoment schneller bereitgestellt wird als das Reibbremsmoment.

Gemäß einer Ausführungsform der Bremsmoment-Regelvorrichtung ist die Recheneinrichtung weiter dazu ausgebildet, zum Bestimmen des Sollwerts für das regenerative Bremsmoment einen zeitlichen Verlauf des Reibbremsmoments zu berücksichtigen. Der zeitliche Verlauf kann für verschiedene Fahrzustände des Kraftfahrzeugs abgespeichert sein und von der Bremsmoment-Regelvorrichtung berücksichtigt werden.

Gemäß einer Ausführungsform der Bremsmoment-Regelvorrichtung umfasst das Berücksichtigen der Dynamik des Antriebsstrangs des Kraftfahrzeug das Berücksichtigen von Federeigenschaften und Dämpfereigenschaften der jeweils angetriebenen Antriebstränge des Kraftfahrzeugs.

Gemäß einer Ausführungsform der Bremsmoment-Regelvorrichtung ist die Recheneinrichtung weiter dazu ausgebildet ist, anhand der Federeigenschaften und Dämpfereigenschaften des Fahrwerks des Kraftfahrzeugs eine dynamische Achslastverlagerung zu berechnen. Insbesondere kann ein Nickwinkel des Kraftfahrzeugs berechnet werden, um auf dieser Basis die Normalkraft zu bestimmen.

Gemäß einer Ausführungsform der Bremsmoment-Regelvorrichtung umfassen die Informationen über den Fahrzustand des Kraftfahrzeugs eine momentane Geschwindigkeit des Kraftfahrzeugs.

### Kurze Beschreibung der Zeichnungen

Es zeigen:
- Figur 1: ein schematisches Blockdiagramm einer Bremsmoment-Regelvorrichtung für ein Kraftfahrzeug gemäß einer Ausführungsform der Erfindung;
- Figur 2: eine schematische Darstellung eines Kraftfahrzeugs zur Erläuterung eines Mehrmassenschwingers-Modells zur Modellierung des dynamischen Verhaltens einer angetriebenen Achse;
- Figur 3: eine schematische Darstellung von Bremsmomenten bei Verwendung eines maximalen regenerativen Bremsmoments;
- Figur 4: eine schematische Darstellung von Bremsmomenten bei Verwendung eines erfindungsgemäß bestimmten regenerativen Bremsmoments; und
- Figur 5: ein Flussdiagramm eines Verfahrens zum Regeln eines Bremsmoments für ein Kraftfahrzeug gemäß einer Ausführungsform der Erfindung.

Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

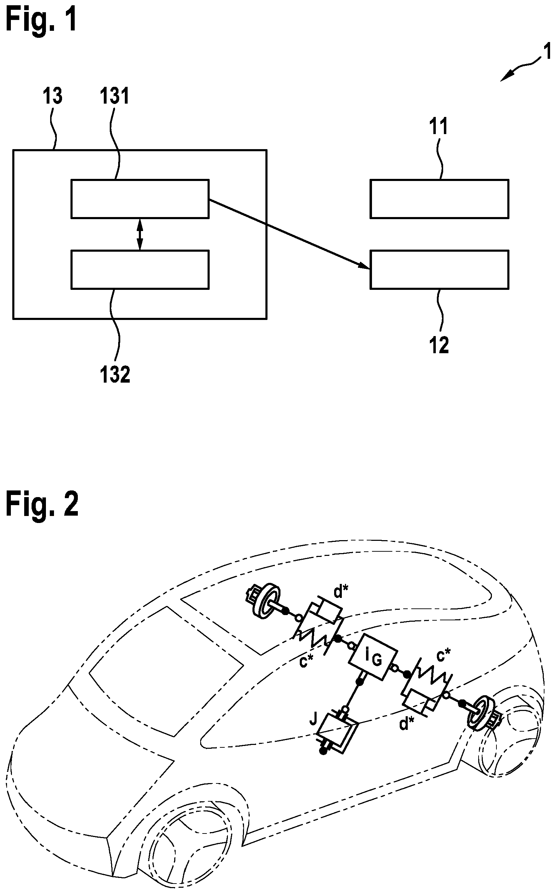

Figur 1 zeigt ein schematisches Blockdiagramm einer Bremsmoment-Regelvorrichtung für ein Kraftfahrzeug. Das Kraftfahrzeug umfasst eine Reibbremse, welche eine erste Bremsvorrichtung 11 darstellt und mindestens ein Rad des Kraftfahrzeugs mit einem Reibbremsmoment beaufschlagt. Weiter umfasst das Kraftfahrzeug eine durch eine als Generator betriebene elektrische Maschine bereitgestellte zweite Bremsvorrichtung 12, welche mindestens ein Rad des Kraftfahrzeugs mit einem regenerativen Bremsmoment beaufschlagt. Vorzugsweise kann das regenerative Bremsmoment für jedes Rad des Kraftfahrzeugs separat eingestellt werden.

Zum Regeln des regenerativen Bremsmoments ist eine Bremsmoment-Regelvorrichtung 13 ausgebildet, welche eine Schnittstelle 131 und eine Recheneinrichtung 132 umfasst. Die Schnittstelle 131 kann drahtlos oder drahtgebunden mit weiteren Komponenten des Kraftfahrzeugs verbunden sein, und Informationen über einen Fahrzustand des Kraftfahrzeugs empfangen. Insbesondere können Informationen über eine Geschwindigkeit und Beschleunigung des Kraftfahrzeugs empfangen werden.

Weiter umfasst die Bremsmoment-Regelvorrichtung 13 eine Recheneinrichtung 132, welche einen Sollwert für das regenerative Bremsmoment bestimmt. Hierzu werden die über die Schnittstelle 131 empfangenen Informationen über den Fahrzustand des Kraftfahrzeugs berücksichtigt. Weiter berücksichtigt die Recheneinrichtung 132 ein maximal auf einen Untergrund übertragbares Achsbremsmoment unter Berücksichtigung einer an den Antriebsachsen wirkenden Normalkraft sowie einer Dynamik des jeweils angetriebenen Antriebsstrangs des Kraftfahrzeug.

Die Recheneinrichtung 132 steuert über die Schnittstelle 131 die zweite Bremsvorrichtung 12 derart an, dass das beaufschlagte regenerative Bremsmoment auf den von der Recheneinrichtung 132 bestimmten Sollwert geregelt wird.

Das Berechnen des regenerativen Bremsmomentes kann unter Berücksichtigung eines Modells für den Antriebsstrang erfolgen, welches im Folgenden im Zusammenhang mit Figur 2 genauer beschrieben wird. Hierzu wird der Antriebsstrang als ein Mehrmassenschwinger beschrieben. Den Seitenwellen sind Steifigkeiten c* (d. h. Federeigenschaften) und Dämpfungswerte d* (d. h. Dämpfereigenschaften) zugeordnet, die äquivalent zu den insgesamt wirkenden Feder- und Dämpfereigenschaften des Antriebsstrangs sind. Der elektrischen Maschine ist eine Massenträgheit J zugeordnet. Weiter kann eine Getriebeübersetzung i_G berücksichtigt werden. Gemäß weiterer Ausführungsformen kann das Modell auch Kraftfahrzeuge mit Mehrganggetriebe und mehreren E-Maschinen je Achse beschreiben.

Weiter können anhand eines physikalischen Modells unter Verwendung des Drallsatzes und unter Berücksichtigung von Feder- und Dämpfereigenschaften des Fahrwerks die Kräfte auf die Räder berechnet werden. Dabei kann insbesondere ein Nickwinkel berechnet werden. Für verschiedene Fahrzustände des Kraftfahrzeugs, das heißt insbesondere für verschiedene Geschwindigkeiten, kann ein auf den Untergrund maximal übertragbares Achsbremsmomentes unter Berücksichtigung der Normalkraft bestimmt werden.

Unter Kenntnis der maximal übertragbaren Normalkraft sowie des dynamischen Verhaltens des Antriebsstrangs kann das Solldrehmoment der elektrischen Maschine optimal eingestellt werden. Dieses optimal zu stellende Moment kann als Funktion in einem Speicher der Recheneinrichtung 132 hinterlegt werden. Als Abhängigkeiten können die Feder- und Dämpfereigenschaften des Antriebsstrangs sowie des Fahrwerks, die maximal zulässige Normalkraft in der jeweiligen Fahrsituation sowie die von der Drehzahl und der Zwischenkreisspannung abhängigen Bremsdrehmomente der elektrischen Maschinen je Achse hinterlegt sein. Zudem kann eine Abschätzung der typischen Latenzzeit zwischen dem Zeitpunkt der Solldrehmomentanforderung und der Reaktion des elektrischen Systems, bestehend aus mindestens einer elektrischer Maschine und mindestens einem Inverter, abgespeichert sein, die bei dem Bestimmen des Sollwerts für das regenerative Bremsmoment berücksichtigt wird.

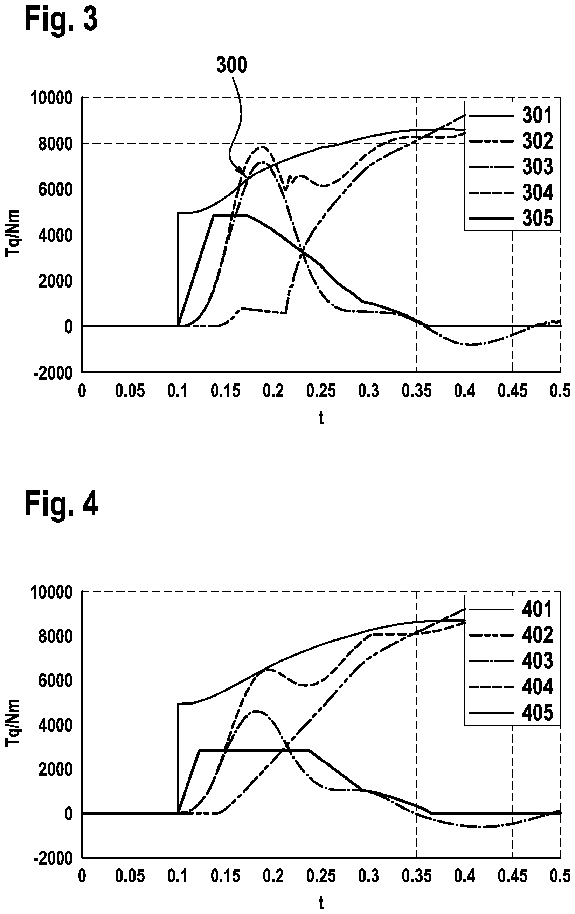

Figur 3 zeigt eine schematische Darstellung von Bremsmomenten während einer Gefahrenbremsung bei Verwendung eines maximalen regenerativen Bremsmoments, d. h. ohne die spezielle Bestimmung des Sollwerts für das regenerative Bremsmoment gemäß der vorliegenden Erfindung. Die Auswirkungen auf das insgesamt wirkende Bremsmoment auf der Vorderachse sind abgebildet, wobei für die Hinterachse ein entsprechendes Verhalten beobachtet werden kann. Eingezeichnet sind die zeitlichen Verläufe eines optimalen Bremsmoments 301, eines Reibbremsmoments 302, eines regenerativen Bremsmoments 303, eines insgesamt wirkenden Bremsmoments 304, welches sich aus dem Reibbremsmoment 302 und dem regenerativen Bremsmoment 303 zusammensetzt, und eines Sollbremsmoments 305 für das regenerative Bremsmoment.

Für eine typische Latenzzeit von 40 ms sowie einem Fahrzeug der SUV (sports utility vehicle)-Klasse mit drehmomentstarkem Antrieb auf beiden Achsen wird das maximal mögliche Bremsdrehmoment der elektrischen Maschine auf der Vorderachse angefordert. Aufgrund des dynamischen Verhaltens führt dies nach kurzer Zeit zu einem Blockieren der Vorderräder (Punkt 300), da die Schlupfgrenze überschritten und damit das ABS trotz geringem aufgebautem hydraulischem Bremsdruck aktiviert wird.

Dieses Verhalten ist insbesondere bei Fahrzeugen mit angetriebener Hinterachse noch deutlicher auch mit Antrieben geringerer Leistung zu erwarten, da an der Hinterachse bei typischer Achslastverteilung während einer Bremsung eine geringere maximale Normalkraft übertragen werden kann.

Figur 4 zeigt eine schematische Darstellung von Bremsmomenten bei Verwendung eines erfindungsgemäß bestimmten regenerativen Bremsmoments. Die ABS-Aktivierung während des hydraulischen Bremsdruckaufbaus lässt sich dadurch vermeiden.

Durch prädiktive Schätzung der maximal übertragbaren Normalkraft und der Kenntnis des dynamischen Verhaltens des Antriebsstrangs kann das Solldrehmoment der elektrischen Maschine derart reduziert und angefordert werden, dass der Überschwinger gerade so bemessen ist, dass ein Blockieren der Räder vermieden wird und sich das maximal wirkende Bremsmoment bestmöglich der Schlupfgrenze annähert. Eingezeichnet sind wiederum die zeitlichen Verläufe eines optimalen Bremsmoments 401, eines Reibbremsmoments 402, eines regenerativen Bremsmoments 403, eines insgesamt wirkenden Bremsmoments 404, welches sich aus dem Reibbremsmoment 402 und dem regenerativen Bremsmoment 403 zusammensetzt, und eines Sollbremsmoments 405 für das regenerative Bremsmoment.

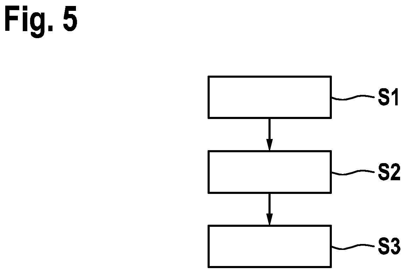

Figur 5 zeigt ein Flussdiagramm eines Verfahrens zum Regeln eines Bremsmoments für ein Kraftfahrzeug, welches insbesondere mit einer oben beschriebenen Bremsmoment-Regelvorrichtung durchgeführt werden kann. Das Kraftfahrzeug umfasst eine erste Bremsvorrichtung 11 und eine zweite Bremsvorrichtung 12, wobei die erste Bremsvorrichtung 11 dazu ausgebildet ist, mindestens ein Rad des Kraftfahrzeugs mit einem Reibbremsmoment zu beaufschlagen, und wobei die zweite Bremsvorrichtung 12 dazu ausgebildet ist, mindestens ein Rad des Kraftfahrzeugs mit einem regenerativen Bremsmoment zu beaufschlagen.

In einem ersten Verfahrensschritt S1 werden Informationen über einen Fahrzustand des Kraftfahrzeugs empfangen.

In einem zweiten Verfahrensschritt S2 wird ein Sollwert für das regenerative Bremsmoment bestimmt, wobei die empfangenen Informationen über den Fahrzustand des Kraftfahrzeugs, ein maximal über die jeweiligen Antriebsachsen des Kraftfahrzeugs auf einen Untergrund übertragbares Achsbremsmoment unter Berücksichtigung einer aufgrund des Nickverhaltens des Fahrzeugs an den Antriebsachsen jeweils wirkenden Normalkraft, sowie eine Dynamik eines Antriebsstrangs der jeweils angetriebenen Achsen des Kraftfahrzeugs berücksichtigt werden.

Der Sollwert für das regenerative Bremsmoment wird derart bestimmt, dass ein Blockieren der Räder des Kraftfahrzeugs während eines Bremsvorgangs vermieden wird. Der Sollwert für das regenerative Bremsmoment wird vorzugsweise derart bestimmt, dass ein regeneratives Bremsmoment an einer Vorderachse des Kraftfahrzeug und/oder eine Normalkraft an einer Hinterachse des Kraftfahrzeugs maximiert wird. Zum Bestimmen des Sollwerts für das regenerative Bremsmoment kann eine Latenzzeit zwischen einem Zeitpunkt einer Solldrehmomentanforderung und einem Zeitpunkt des Beaufschlagens des mindestens einen Rades mit dem regenerativen Drehmoment berücksichtigt werden. Insbesondere kann zum Bestimmen des Sollwerts für das regenerative Bremsmoment ein zeitlicher Verlauf des Reibbremsmoments berücksichtigt werden.

Das Berücksichtigen der Dynamik des Antriebsstrangs des Kraftfahrzeug kann das Berücksichtigen von Federeigenschaften und Dämpfereigenschaften des Antriebsstrangs des Kraftfahrzeugs umfassen. Anhand der Federeigenschaften und Dämpfereigenschaften des Fahrwerks des Kraftfahrzeugs kann eine dynamische Achslastverlagerung berechnet werden.

In einem dritten Verfahrensschritt S3 wird die zweite Bremsvorrichtung derart angesteuert, dass das beaufschlagte regenerative Bremsmoment auf den von der Recheneinrichtung bestimmten Sollwert geregelt wird.

## Patentansprüche

1. Bremsmoment-Regelvorrichtung (13) für ein Kraftfahrzeug, wobei das Kraftfahrzeug eine erste Bremsvorrichtung (11) und eine zweite Bremsvorrichtung (12) umfasst, wobei die erste Bremsvorrichtung (11) dazu ausgebildet ist, mindestens ein Rad des Kraftfahrzeugs mit einem Reibbremsmoment zu beaufschlagen, und wobei die zweite Bremsvorrichtung (12) dazu ausgebildet ist, mindestens ein Rad des Kraftfahrzeugs mit einem regenerativen Bremsmoment zu beaufschlagen, wobei die Bremsmoment-Regelvorrichtung (13) aufweist:
eine Schnittstelle (131), welche dazu ausgebildet ist, Informationen über einen Fahrzustand des Kraftfahrzeugs zu empfangen;
**gekennzeichnet durch**
eine Recheneinrichtung (132), welche dazu ausgebildet ist, unter Berücksichtigung
- der empfangenen Informationen über den Fahrzustand des Kraftfahrzeugs,
- eines maximal über Antriebsachsen des Kraftfahrzeugs auf einen Untergrund übertragbaren Achsbremsmomentes unter Berücksichtigung einer aufgrund eines Nickverhaltens des Fahrzeugs an den Antriebsachsen jeweils wirkenden Normalkraft, und
- einer Dynamik eines Antriebsstrangs der jeweils angetriebenen Achsen des Kraftfahrzeugs
einen Sollwert für das regenerative Bremsmoment zu bestimmen;
wobei die Recheneinrichtung (132) weiter dazu ausgebildet ist, über die Schnittstelle (131) die zweite Bremsvorrichtung (12) derart anzusteuern, dass das beaufschlagte regenerative Bremsmoment auf den von der Recheneinrichtung (132) bestimmten Sollwert geregelt wird,
wobei die Recheneinrichtung (132) weiter dazu ausgebildet ist, den Sollwert für das regenerative Bremsmoment derart zu bestimmen, dass ein regeneratives Bremsmoment an einer Vorderachse des Kraftfahrzeug und/oder eine Normalkraft an einer Hinterachse des Kraftfahrzeugs maximiert wird.

2. Bremsmoment-Regelvorrichtung (13) nach Anspruch 1, wobei die Recheneinrichtung (132) weiter dazu ausgebildet ist, den Sollwert für das regenerative Bremsmoment derart zu bestimmen, dass ein Blockieren der Räder des Kraftfahrzeugs während eines Bremsvorgangs vermieden wird.

3. Bremsmoment-Regelvorrichtung (13) nach einem der vorangehenden Patentansprüche, wobei die Recheneinrichtung (132) weiter dazu ausgebildet ist, zum Bestimmen des Sollwerts für das regenerative Bremsmoment eine Latenzzeit zwischen einem Zeitpunkt einer Solldrehmomentanforderung und einem Zeitpunkt des Beaufschlagens des mindestens einen Rades mit dem regenerativen Drehmoment zu berücksichtigen.

4. Bremsmoment-Regelvorrichtung (13) nach einem der vorangehenden Patentansprüche, wobei die Recheneinrichtung (132) weiter dazu ausgebildet ist, zum Bestimmen des Sollwerts für das regenerative Bremsmoment einen zeitlichen Verlauf des Reibbremsmoments zu berücksichtigen.

5. Bremsmoment-Regelvorrichtung (13) nach einem der vorangehenden Patentansprüche, wobei das Berücksichtigen der Dynamik des Antriebsstrangs des Kraftfahrzeugs das Berücksichtigen von Federeigenschaften und Dämpfereigenschaften des Antriebsstrangs des Kraftfahrzeugs umfasst.

6. Bremsmoment-Regelvorrichtung (13) nach Anspruch 5, wobei die Recheneinrichtung (132) weiter dazu ausgebildet ist, anhand der Federeigenschaften und Dämpfereigenschaften des Fahrwerks des Kraftfahrzeugs eine dynamische Achslastverlagerung zu berechnen.

7. Bremsmoment-Regelvorrichtung (13) nach einem der vorangehenden Patentansprüche, wobei die Informationen über den Fahrzustand des Kraftfahrzeugs eine momentane Geschwindigkeit des Kraftfahrzeugs umfassen.

8. Bremssystem (1) für ein Kraftfahrzeug, mit:
einer ersten Bremsvorrichtung (11), welche dazu ausgebildet ist, mindestens ein Rad des Kraftfahrzeugs mit einem Reibbremsmoment zu beaufschlagen;
einer zweiten Bremsvorrichtung (12), welche dazu ausgebildet ist, mindestens ein Rad des Kraftfahrzeugs mit einem regenerativen Bremsmoment zu beaufschlagen; und
einer Bremsmoment-Regelvorrichtung (13) nach einem der vorangehenden Ansprüche.

9. Verfahren zum Regeln eines Bremsmoments für ein Kraftfahrzeug, wobei das Kraftfahrzeug mit einem Bremssystem nach Anspruch 8 ausgestattet ist, mit den Schritten: Empfangen (S1) von Informationen über einen Fahrzustand des Kraftfahrzeugs; Bestimmen (S2) eines Sollwertes für das regenerative Bremsmoment unter Berücksichtigung
- der empfangenen Informationen über den Fahrzustand des Kraftfahrzeugs,
- eines maximal über Antriebsachsen des Kraftfahrzeugs auf einen Untergrund übertragbaren Achsbremsmomentes unter Berücksichtigung einer aufgrund eines Nickverhaltens des Fahrzeugs an den Antriebsachsen jeweils wirkenden Normalkraft, und
- einer Dynamik eines Antriebsstrangs der jeweils angetriebenen Achsen des Kraftfahrzeugs; und
Ansteuern (S3) der zweiten Bremsvorrichtung (12), sodass das beaufschlagte regenerative Bremsmoment auf den von der Recheneinrichtung (132) bestimmten Sollwert geregelt wird.

## Claims

1. Braking torque control device (13) for a motor vehicle, wherein the motor vehicle comprises a first braking device (11) and a second braking device (12), wherein the first braking device (11) is designed to apply a frictional braking torque to at least one wheel of the motor vehicle, and wherein the second braking device (12) is designed to apply a regenerative braking torque to at least one wheel of the motor vehicle, wherein the braking torque control device (13) has:
an interface (131), which is designed to receive information relating to a driving state of the motor vehicle;
**characterized by**
a computing device (132), which is designed so as, while taking into consideration
- the received information relating to the driving state of the motor vehicle,
- a maximum axle braking torque that can be transmitted via drive axles of the motor vehicle to an underlying surface while taking into consideration a normal force acting respectively on the drive axles owing to a pitching behaviour of the vehicle, and
- dynamics of a drivetrain of the respectively driven axles of the motor vehicle, to determine a setpoint value for the regenerative braking torque;
wherein the computing device (132) is also designed to actuate the second braking device (12) via the interface (131) such that the applied regenerative braking torque is adjusted by control to the setpoint value determined by the computing device (132),
wherein the computing device (132) is also designed to determine the setpoint value for the regenerative braking torque in such a way that a regenerative braking torque on a front axle of the motor vehicle and/or a normal force on a rear axle of the motor vehicle is maximized.

2. Braking torque control device (13) according to Claim 1, wherein the computing device (132) is also designed to determine the setpoint value for the regenerative braking torque in such a way that locking of the wheels of the motor vehicle during a braking operation is avoided.

3. Braking torque control device (13) according to one of the preceding patent claims, wherein the computing device (132) is also designed so as, for determining the setpoint value for the regenerative braking torque, to take into consideration a latency between a point in time when a setpoint torque is requested and a point in time when the regenerative torque is applied to the at least one wheel.

4. Braking torque control device (13) according to one of the preceding patent claims, wherein the computing device (132) is also designed so as, for determining the setpoint value for the regenerative braking torque, to take into consideration a variation over time of the frictional braking torque.

5. Braking torque control device (13) according to one of the preceding patent claims, wherein taking into consideration the dynamics of the drivetrain of the motor vehicle includes taking into consideration spring properties and damper properties of the drivetrain of the motor vehicle.

6. Braking torque control device (13) according to Claim 5, wherein the computing device (132) is also designed to calculate a dynamic axle-load transfer on the basis of the spring properties and damper properties of the chassis and suspension of the motor vehicle.

7. Braking torque control device (13) according to one of the preceding patent claims, wherein the information relating to the driving state of the motor vehicle includes a momentary speed of the motor vehicle.

8. Brake system (1) for a motor vehicle, with:
a first braking device (11), which is designed to apply a frictional braking torque to at least one wheel of the motor vehicle;
a second braking device (12), which is designed to apply a regenerative braking torque to at least one wheel of the motor vehicle; and
a braking torque control device (13) according to one of the preceding claims.

9. Method for controlling a braking torque for a motor vehicle, wherein the motor vehicle is equipped with a brake system according to Claim 8, with the steps of:
receiving (S1) information relating to a driving state of the motor vehicle;
determining (S2) a setpoint value for the regenerative braking torque while taking into consideration
- the received information relating to the driving state of the motor vehicle,
- a maximum axle braking torque that can be transmitted via drive axles of the motor vehicle to an underlying surface while taking into consideration a normal force acting respectively on the drive axles owing to a pitching behaviour of the vehicle, and
- dynamics of a drivetrain of the respectively driven axles of the motor vehicle; and actuating (S3) the second braking device (12) such that the applied regenerative braking torque is adjusted by control to the setpoint value determined by the computing device (132).

## Revendications

1. Arrangement de régulation de couple de freinage (13) pour un véhicule automobile, le véhicule automobile comprenant un premier arrangement de freinage (11) et un deuxième arrangement de freinage (12), le premier arrangement de freinage (11) étant configuré pour soumettre au moins une roue du véhicule automobile à un couple de freinage par friction, et le deuxième arrangement de freinage (12) étant configuré pour soumettre au moins une roue du véhicule automobile à un couple de freinage régénératif, le dispositif de régulation de couple de freinage (13) présentant :
une interface (131), laquelle est configurée pour recevoir des informations à propos d'un état de marche du véhicule automobile ;
**caractérisé par**
un dispositif de calcul (132), lequel est configuré pour, en tenant compte
- des informations reçues à propos de l'état de marche du véhicule automobile,
- d'un couple de freinage d'essieu maximal pouvant être transmis à un sol par le biais des essieux moteurs du véhicule automobile, en tenant compte d'une force normale qui agit respectivement sur les essieux moteurs en raison d'un comportement de tangage du véhicule, et
- d'une dynamique d'un groupe motopropulseur des essieux respectivement menés du véhicule automobile
déterminer une valeur de consigne pour le couple de freinage régénératif ;
le dispositif de calcul (132) étant en outre configuré pour commander le deuxième arrangement de freinage (12) par le biais de l'interface (131) de telle sorte que le couple de freinage régénératif appliqué soit régulé à la valeur de consigne déterminée par le dispositif de calcul (132),
le dispositif de calcul (132) étant en outre configuré pour déterminer la valeur de consigne pour le couple de freinage régénératif de telle sorte qu'un couple de freinage régénératif sur un essieu avant du véhicule automobile et/ou une force normale sur un essieu arrière du véhicule automobile soient maximisés.

2. Arrangement de régulation de couple de freinage (13) selon la revendication 1, le dispositif de calcul (132) étant en outre configuré pour déterminer la valeur de consigne pour le couple de freinage régénératif de telle sorte qu'un blocage des roues du véhicule automobile est évité pendant une opération de freinage.

3. Arrangement de régulation de couple de freinage (13) selon l'une des revendications précédentes, le dispositif de calcul (132) étant en outre configuré pour, en vue de déterminer la valeur de consigne pour le couple de freinage régénératif, tenir compte d'un temps de latence entre un instant d'une demande de couple de consigne et un instant auquel l'au moins une roue est soumise au couple régénératif.

4. Arrangement de régulation du couple de freinage (13) selon l'une des revendications précédentes, le dispositif de calcul (132) étant en outre configuré pour, en vue de déterminer la valeur de consigne pour le couple de freinage régénératif, tenir compte d'une évolution dans le temps du couple de freinage par friction.

5. Arrangement de régulation du couple de freinage (13) selon l'une des revendications précédentes, la prise en compte de la dynamique du groupe motopropulseur du véhicule automobile comprenant la prise en compte des propriétés de ressort et des propriétés d'amortissement du groupe motopropulseur du véhicule automobile.

6. Arrangement de régulation du couple de freinage (13) selon la revendication 5, le dispositif de calcul (132) étant en outre configuré pour calculer un déplacement dynamique de la charge d'essieu à l'aide des propriétés de ressort et des propriétés d'amortissement du châssis du véhicule automobile.

7. Arrangement de régulation du couple de freinage (13) selon l'une des revendications précédentes, les informations sur l'état de marche du véhicule automobile comprenant une vitesse momentanée du véhicule automobile.

8. Système de freinage (1) pour un véhicule automobile, comprenant :
un premier arrangement de freinage (11), lequel est configuré pour soumettre au moins une roue du véhicule automobile à un couple de freinage par friction ;
un deuxième arrangement de freinage (12), lequel est configuré pour soumettre au moins une roue du véhicule automobile à un couple de freinage régénératif ; et
un arrangement de régulation du couple de freinage (13) selon l'une des revendications précédentes,

9. Procédé de régulation d'un couple de freinage pour un véhicule automobile, le véhicule automobile étant équipé d'un système de freinage selon la revendication 8, comprenant les étapes suivantes :
réception (S1) d'informations à propos d'un état de marche du véhicule automobile ;
détermination (S2) d'une valeur de consigne pour le couple de freinage régénératif en tenant compte
- des informations reçues à propos de l'état de marche du véhicule automobile,
- d'un couple de freinage d'essieu maximal pouvant être transmis à un sol par le biais des essieux moteurs du véhicule automobile, en tenant compte d'une force normale qui agit respectivement sur les essieux moteurs en raison d'un comportement de tangage du véhicule, et
- d'une dynamique d'un groupe motopropulseur des essieux respectivement menés du véhicule automobile ; et
commande (S3) du deuxième arrangement de freinage (12), de telle sorte que le couple de freinage régénératif appliqué soit régulé à la valeur de consigne déterminée par le dispositif de calcul (132).
